# EUROPEAN PATENT SPECIFICATION

(11) **EP 2 410 698 B1**
(45) Date of publication and mention of the grant of the patent: **07.05.2014**
(21) Application number: 10305791.5
(22) Date of filing: 19.07.2010
(51) Int. Cl.: H04L 12/751

(54) **A method for routing and associated routing device and destination device**
Verfahren zum Routen und zugehörige Routing-Vorrichtung und Zielvorrichtung
Procédé d'acheminement et dispositif d'acheminement associé et dispositif de destination

(43) Date of publication of application: 25.01.2012
(73) Proprietor: Alcatel Lucent, 75007 Paris (FR)
(72) Inventor: Van Ackere, Michel, 9100 Sint-Niklaas (BE); Migdisoglu, Murat, 2000 Antwerpen (BE)
(74) Representative: ALU Antw Patent Attorneys

(56) References cited:
- WO-A2-01/20856
- US-A1- 2004 177 158
- US-A1- 2008 040 306

## Description

The present invention relates to a method according to the preamble of claim 1, a routing device according to the preamble of claim 12, and a destination device adapted for configuring such a routing device.

WO 01/20856 discloses a router comprising storing means for storing a predefined list of rules for detecting special data packets, detecting means for detecting special data packets in the received plurality of data packets on the basis of the predefined list of rules, and for handling the special data packets in accordance with these instructions and e.g. modifying the packets and outputting or routing them accordingly.

A wide variety of routing devices, as for instance network routers, the use thereof and methods for routing are known in the state of the art.

It is known that an external control device which is connected to the routing device (e.g. operator, application, etc.) may install a rule on the routing device in a (semi) static way, e.g. by means of Command Line Interface (CLI) commands .

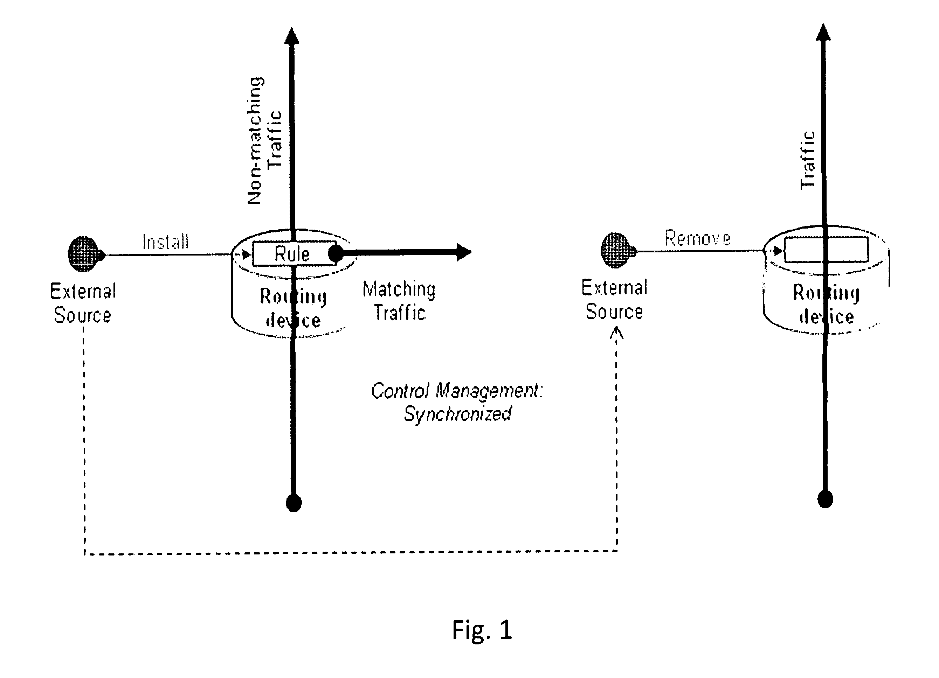

In current solutions, illustrated in Fig. 1, the removal of such a rule from a routing device must be carefully synchronized with the traffic that is matching it (or to which the rule is applicable). When such a rule is removed while matching traffic is running through it, part of the matching traffic can erroneously follow a wrong route. Therefore such a rule typically remains configured for a long period, having a duration much longer than that in which matching traffic is expected, or until the external source is sufficiently sure that it is safe to actively deactivate the rule. This requires the external control device to remain in control of the routing device, even though the external control device may no longer be interested in or able to monitor the traffic that matches that rule after it has configured it. In addition to and as a result of the complex control management, this may lead to many more such rules on such a routing device than are actually required.

An example of a prior art solution can be found in special features of the "iptables" solution in the Linux Operating System (OS) (see for instance http://netfilter.org/projects/patch-o-matic/pomexternal.html ; iptables "time" match). In this solution the rule remains installed until an external source removes it, even though it is active only for traffic that hits it during a specified time window (e.g. after a specified start time, before a specified stop time, during a repetitive time window, etc.).

### Summary of the invention

The method of the present invention is distinguished by the features of the characterizing portion of claim 1. The routing device of the present invention is distinguished by the features of the characterizing portion of claim 12. The destination device adapted for configuring such a routing device has the features of claim 13.

The disclosed methods and devices provide a relatively simple management scheme of routing rules in a routing device.

According to a first aspect of the present invention, a method is disclosed for routing in a routing device of data packets of a communication session between a source device and a destination device. The routing device comprises at least one ingress interface for receiving data packets of the communication session and at least two egress interfaces for forwarding the data packets.

The interfaces can be physical or logical interfaces. In the case for instance of having at least two logical egress interfaces, those interfaces may be supported by a single physical egress interface.

The method preferably comprises performing in the routing device:
a. receiving a plurality of data packets of the communication session;
b. consulting a set of routing rules for each data packet of the plurality of data packets, the set of routing rules indicating on which of the at least two egress interfaces each data packet of the plurality of data packets is to be forwarded;
c. forwarding each of the plurality of data packets on the respective egress interfaces; wherein the method further comprises
d. deriving information from the plurality of data packets;
e. deactivating at least one routing rule of the set of routing rules, at least based on whether the information meets predetermined criteria.

It is an advantage of aspects of the present invention that a routing rule can be locally managed in a routing device and does not need further external control and monitoring after installation of the routing rule.

Deactivating at least one routing rule may comprise or consist of removing the routing rule.

Because the method according to aspects of the present invention allows a local control of the routing rule, i.e. being in the routing device itself, the routing rule can be more efficiently and rapidly removed, which may reduce memory and/or processing capacity of the routing device, as well as of the destination device/ an external device.

The plurality of data packets can be a number of subsequent data packets of a particular data communication session. The plurality of data packets can comprise or consist of the first M (M being a integer value) data packets of a data communication session, as for instance a number of data packets used for session set-up between a source and a destination device. The number of data packets used for session set-up may be known to the destination device, or may be derived by the destination device from the first data packet of the communication session.

According to preferred embodiments, the routing device is a router as for instance an IP router. The routing device may be a basic Internet Protocol routing device or may be a more advanced router which is for instance capable of performing deep packet inspection of packets. The routing device can also be a firewall, or a rule decision device based on layers above layer 4 in the OSI layer. The communication session may be for instance an Internet protocol (IP or TCP or UDP) session. When performing deep packet inspection, information of the packets payload can be analysed, instead of or additionally to the information in the (IP- or TCP- or UDP-)packet header.

The set of routing rules may correspond to or comprise standard routing tables. The set of routing rules may also comprise so-called "policy based routing rules", which may comprise rules comprised in standard routing tables but also in additional tables used for implementing routing policies in the router.

According to preferred embodiments of the present invention, deriving information from the plurality of data packets comprises analysing characteristics of an arrival sequence of the plurality of data packets, arriving at the routing device. The characteristics of the arrival sequence may for instance comprise the number of data packets of the sequence, the arrival rate, or time related characteristics.

According to preferred embodiments of the present invention, deriving information from the plurality of data packets comprises determining the number of data packets to which a particular routing rule has been applicable, and deactivating at least one routing rule comprises deactivating the particular routing rule. The deactivation can for instance take place when the number of data packets to which a particular routing rule has been applicable equals a predetermined number. It is an advantage of such embodiments that a routing rule can be installed which is active only for a certain number of data packets of a communication session, for instance only to data packets used for session set-up.

According to preferred embodiments of the present invention, the plurality of data packets comprises a first packet having an arrival time and a particular routing rule of the set of routing rules has an installation time, deriving the information comprises determining a time elapsed between the installation time of the particular routing rule and the arrival time of a first packet of the communication session to which the particular routing rule is applicable, and deactivating at least one routing rule comprises deactivating the particular routing rule. The deactivation can for instance take place when the time elapsed reaches a predetermined threshold value. It is an advantage of such embodiments that a routing rule can be removed or deactivated when it does not seem to be applicable to any of the data packets of the plurality of data packets of the data communication session passing in the routing device.

According to preferred embodiments of the present invention, the plurality of data packets comprises a last packet having an arrival time, deriving the information comprises determining a time elapsed since the arrival time of the last packet of the plurality of data packets to which a particular routing rule has been applied, and deactivating at least one routing rule comprises deactivating the particular routing rule. The deactivation can for instance take place when the time elapsed reaches a predetermined threshold value. It is an advantage of such embodiments that a routing rule can be removed or deactivated when it does not seem to be applicable anymore to any of the data packets of the plurality of data packets of the data communication session passing in the routing device.

According to preferred embodiments of the present invention, determining the information comprises deep packet inspection (DPI) of the plurality of data packets. It can be an advantage that information of the packet payload can be analysed, instead of or additionally to the information in the (IP- or TCP- or UDP-)packet header.

According to preferred embodiments of the present invention, deriving information comprises detecting a packet of the communication session which comprises a request for routing rule removal. The detection of an explicit request for removal of a routing rule can for instance be based on the detection of the presence of a specific field in the header of a data packet of the plurality of data packets. It can for instance also be based on a specific format of a data package.

According to preferred embodiments of the present invention, deriving information comprises detecting the presence of a specific field in a data packet of the plurality of data packets.

In embodiments wherein deriving information comprises detecting a packet of the communication session which comprises a request for routing rule removal and/or comprises detecting the presence of a specific field in a data packet of the plurality of data packets, it can be an advantage that the routing device requires less processing and/or memory capacity.

According to preferred embodiments of the present invention, deriving information from the plurality of data packets can comprises analysing the content of the data packets. It may comprise analysing OSI stack level 3 information, as for instance information of the IP-packet header. It may also comprise, for instance for routing devices adapted to perform deep packet inspection, analysing information of the OSI stack level 4 as for instance the TCP or UDP header information.

According to preferred embodiments of the present invention, the method further comprises receiving a routing rule and associated deactivation criteria from the destination device after having forwarded a first data packet of the plurality of data packets to the destination device and before sending a second data packet of the plurality of data packets.

It can be an advantage of such embodiments that, upon detection of the type of communication session by the destination device, based on the first packet of the communication session, the destination device can redirect the session before continuing the session set-up, e.g. by forwarding the second packet of the plurality of data packets.

According to a second aspect of the present invention, a method is disclosed for configuring a routing device by a destination device, the routing device routing data packets of a communication session between a source device and the destination device, the routing device comprising at least one ingress interface for receiving data packets of the communication session and at least two egress interfaces for forwarding the data packets, comprising at the destination device
a. receiving a first data packet of the communication session;
b. analysing the first data packet;
c. based on this analysis, determining a routing rule and associated deactivation criteria for the communication session, the routing rule indicating on which of the egress interfaces the data packets are to be forwarded;
d. sending instructions for installing the routing rule and the associated deactivation criteria to the routing device.

The deactivation criteria may, at least in part, be determined by upfront configuration of the destination device, and/or by using information about the communication session between the source and destination device known to the destination device.

According to preferred embodiments, the method further comprises sending a resend request for the first data packet of the communication session to the source device after sending instructions for installing the routing rule and the associated deactivation criteria to the routing device. By sending a resend request for the first data packet of the communication session to the source device, after sending instructions for installing the routing rule and the associated deactivation criteria to the routing device, especially after the installation of the routing rule and the associated deactivation criteria on the routing device, the session setup is reinitiated, and the data communication can (transparently for the source device, i.e. while the source device is unaware) be deflected to an alternative destination device.

According to a third aspect of the present invention, a routing device for use in a data communication network is disclosed, the routing device comprising at least one ingress interface for receiving data packets of a communication session between a source device and a destination device and at least two egress interfaces for forwarding the data packets, a storage means for storing a set of routing rules and associated deactivation criteria for at least one routing rule of the set of routing rules and a means for determining on which of the at least two egress interfaces the received packets are to be forwarded based on the set of at least one routing rule the set of at least one routing rule indicating on which of the at least two egress interfaces the received packets are to be forwarded, wherein the routing device is adapted to deactivate at least one of the set of at least one routing rule at least based on whether information derived from the data packets meets the predetermined criteria.

According to a fourth aspect of the present invention, a destination device adapted for configuring a routing device is disclosed, the routing device routing data packets of a communication session between a source device and the destination device, the routing device comprising at least one ingress interface for receiving data packets of the communication session and at least two egress interfaces for forwarding the data packets, comprising:
- a means for analysing a first data packet of the communication session;
- a means for determining, based on this analysis, a routing rule and associated deactivation criteria for the communication session, the routing rule indicating on which of the egress interfaces the data packets are to be forwarded;
- a means creating an instruction message for installing the routing rule and the associated deactivation criteria on the routing device and for sending the instruction message to the routing device.

According to preferred embodiments, the destination device is further adapted for sending a resend request for the first data packet of the communication session to the source device after sending the instruction message to the routing device.

The features from the dependent claims, features of any of the independent claims and any features of other dependent claims may be combined as considered appropriate to the person of ordinary skill, and not only in the particular combinations as defined by the claims.

Features and advantages of the different aspects of the present invention are equally meant to be disclosed for the other, associated aspects, as would be recognised by the skilled person, and are therefore not repeated for every aspect.

### Brief description of the drawings

The accompanying drawings are used to illustrate embodiments of the present invention.
Fig. 1 illustrates a routing system and associated method according to the prior art.
Fig. 2 illustrates a routing system and associated methods according to embodiments of the present invention.

### Description of illustrative embodiments

The description of aspects of the present invention is performed by means of particular embodiments and with reference to certain drawings but the invention is not limited thereto. Depicted figures are only schematic and should not be considered as limiting.

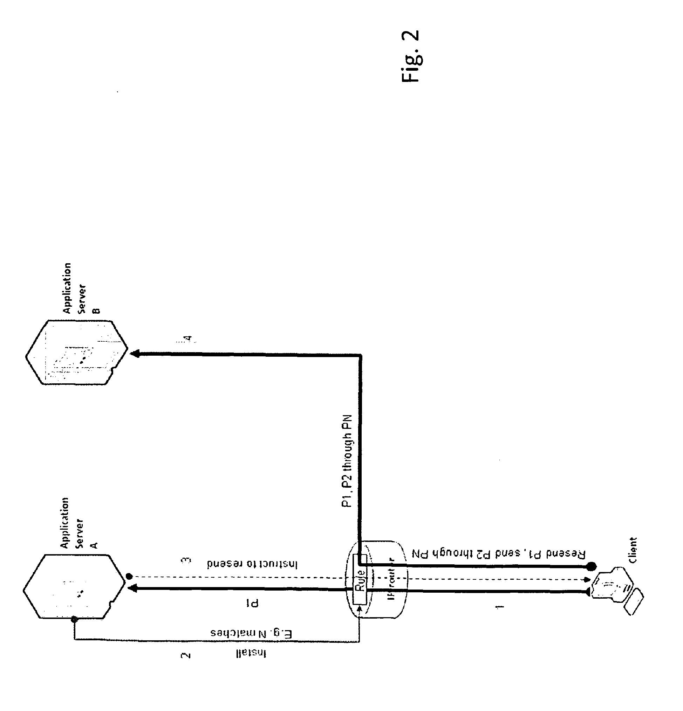

An example embodiment is illustrated in Fig. 2. An IP-router forwards a message/packet sent by a client/source device to an application server/destination device A (P1, step 1). Upon receiving a 1st message/packet (P1) that A decides not to process (and that allows to derive the amount N of subsequent messages (P1 through PN) to A that A decides not to process), A installs on the IP-router a routing rule/deflection rule, adapted for routing packets towards another application server B for subsequent packets from that client to A (step 2). The source device can be unaware of this process. Then the destination device A instructs the client/source device to resend to A that last received message/packet (P1) before also sending the subsequent N-1 messages (P2 through PN) to A (step 3). The N last messages that the client sends to A actually arrive at (and are responded to by) B (typically without A being aware) (step 4).

After the IP-router has deflected to B the N last messages that the client sent to A, the rule autonomously and automatically "dissolves" in the IP-router, when the router deactivates or removed the rule. From that moment onwards, the IP-router follows other routing rules which are active and typically forwards the subsequent messages which are sent to A by the client/source device again to A.

N can for instance be known from the first message/packet that A decides to defer to B, from upfront configuration of A/destination device or from prior knowledge of the client(source device)/server(destination device) interaction.

The example embodiment is based on the number of matching message packets, being the number of packets to which the rule to be deactivated has been applicable, as a criteria. Other criteria are equally possible, depending on the needs for the client(source device)/server(destination device) interaction.

This example has been described for an IP-router. The proposal is equally applicable for other, non-IP devices in which some routing decision is made based on from externally installed matching/routing rules.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein the instructions perform some or all of the steps of the above-described methods. The program storage devices may be, e.g., digital memories, magnetic storage media such as a magnetic disks and magnetic tapes, hard drives, or optically readable digital data storage media. The embodiments are also intended to cover computers programmed to perform the steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

## Claims

1. A method for routing in a routing device of data packets of a communication session between a source device and a destination device, said routing device comprising at least one ingress interface for receiving data packets of said communication session and at least two egress interfaces for forwarding said data packets, comprising performing in said routing device:
a. receiving a plurality of data packets of said communication session;
b. consulting a set of routing rules for each data packet of said plurality of data packets, said set of routing rules indicating on which of said at least two egress interfaces each data packet of said plurality of data packets is to be forwarded;
c. forwarding each of said plurality of data packets on the respective egress interfaces; and
d. deriving information from said plurality of data packets; **characterized by**:
e. deactivating at least one routing rule of said set of routing rules, at least based on whether said information meets predetermined criteria, and
f. receiving a routing rule and associated deactivation criteria from said destination device after having forwarded a first data packet of said plurality of data packets to said destination device and before sending a second data packet of said plurality of data packets.

2. The method according to claim 1, wherein deriving information from said plurality of data packets comprises analysing characteristics of an arrival sequence of said plurality of data packets, arriving at said routing device.

3. The method according to claim 1 or 2, wherein deriving information from said plurality of data packets comprises determining the number of data packets to which a particular routing rule has been applicable, and wherein said deactivating at least one routing rule comprises deactivating said particular routing rule.

4. The method according to claim 1 or 2, wherein said plurality of data packets comprises a first packet having an arrival time and wherein a particular routing rule of said set of routing rules has an installation time, wherein deriving said information comprises determining a time elapsed between the installation time of said particular routing rule and the arrival time of a first packet of said plurality of data packets to which said particular routing rule is applicable, and wherein said deactivating at least one routing rule comprises deactivating said particular routing rule.

5. The method according to claim 1 or 2, wherein said plurality of data packets comprises a last packet having an arrival time, wherein deriving said information comprises determining a time elapsed since the arrival time of the last packet of said plurality of data packets to which a particular routing rule of said set of routing rules has been applied, and wherein said deactivating at least one routing rule comprises deactivating said particular routing rule.

6. The method according to any of the previous claims, wherein deriving information from said plurality of data packets comprises analysing the content of said plurality of data packets.

7. The method according to claim 6, wherein determining said information comprises deep packet inspection of said plurality of data packets.

8. The method according to claim 6 or 7, wherein deriving said information comprises detecting a packet of said communication session which comprises a request for routing rule removal.

9. The method according to any of claims 6 to 8, wherein deriving said information comprises detecting the presence of a specific field in a data packet of said plurality of data packets.

10. A method for configuring a routing device by a destination device, said routing device routing data packets according to the method of any of the previous claims, comprising at said destination device:
a. receiving a first data packet of said communication session;
b. analysing said first data packet;
c. based on said analysis, determining a routing rule and associated deactivation criteria for said communication session, said routing rule indicating on which of said egress interfaces said data packets are to be forwarded;
d. sending instructions for installing said routing rule and said associated deactivation criteria to said routing device.

11. The method according to claim 10, further comprising sending a resend request for said first data packet of said communication session to said source device after sending instructions for installing said routing rule and said associated deactivation criteria to said routing device.

12. A routing device for use in a data communication network, said routing device comprising:
- at least one ingress interface for receiving data packets of a communication session between a source device and a destination device and
- at least two egress interfaces for forwarding said data packets,
- a storage means for storing a set of routing rules and associated deactivation criteria for at least one routing rule of said set of routing rules and
- a means for determining on which of said at least two egress interfaces said received packets are to be forwarded based on said set of at least one routing rule, said set of at least one routing rule indicating on which of said at least two egress interfaces said received packets are to be forwarded,
**characterized in that** said routing device is adapted to:
- deactivate at least one of said set of at least one routing rule at least based on whether information derived from said data packets meets said predetermined criteria, and
- receive a routing rule and associated deactivation criteria from said destination device after having forwarded a first data packet of said plurality of data packets to said destination device and before sending a second data packet of said plurality of data packets.

13. A destination device adapted for configuring a routing device according to claim 12, comprising:
- a means for analysing a first data packet of a communication session between a source device and a destination device;
- a means for determining, based on said analysis, a routing rule and associated deactivation criteria for said communication session, said routing rule indicating on which of at least two egress interfaces of a routing device the data packets are to be forwarded;
- a means for creating an instruction message for installing the routing rule and the associated deactivation criteria on the routing device and for sending said instruction message to said routing device.

14. The destination device according to claim 13, further adapted for sending a resend request for said first data packet of said communication session to said source device after sending said instruction message to said router.

## Patentansprüche

1. Verfahren zum Routen, in einer Routing-Vorrichtung, von Datenpaketen einer Kommunikationssitzung zwischen einer Quell-Vorrichtung und einer Ziel-Vorrichtung, wobei die besagte Routing-Vorrichtung mindestens eine Eingangsschnittstelle für den Empfang von Datenpaketen der besagten Kommunikationssitzung und mindestens zwei Ausgangsschnittstellen für die Weiterleitung der besagten Datenpakete umfasst, umfassend das Durchführen der folgenden Schritte in der besagten Routing-Vorrichtung:
a. Empfangen einer Vielzahl von Datenpaketen der besagten Kommunikationssitzung;
b. Einsehen eines Satzes von Routing-Regeln für jedes Datenpaket der besagten Vielzahl von Datenpaketen, wobei der besagte Satz von Routing-Regeln angibt, auf welcher der besagten mindestens zwei Ausgangsschnittstellen jedes Datenpaket der besagten Vielzahl von Datenpaketen weiterzuleiten ist;
c. Weiterleiten eines jeden der besagten Datenpakete auf den jeweiligen Ausgangsschnittstellen; und
d. Ableiten von Informationen aus der besagten Vielzahl von Datenpaketen;
**gekennzeichnet durch**:
e. Deaktivieren mindestens einer Routing-Regel des besagten Satzes von Routing-Regeln, zumindest darauf basierend, ob die besagten Informationen ein vorbestimmtes Kriterium erfüllen, und
f. Empfangen einer Routing-Regel und von assoziierten Deaktivierungskriterien von der besagten Ziel-Vorrichtung nach Weiterleiten eines ersten Datenpakets der besagten Vielzahl von Datenpaketen an die besagte Ziel-Vorrichtung und vor Senden eines zweiten Datenpakets der besagten Vielzahl von Datenpaketen.

2. Verfahren nach Anspruch 1, wobei das Ableiten von Informationen aus der besagten Vielzahl von Datenpaketen das Analysieren der Eigenschaften einer Ankunftssequenz der besagten Vielzahl von Datenpaketen, welche an der besagten Routing-Vorrichtung eingehen, umfasst.

3. Verfahren nach Anspruch 1 oder 2, wobei das Ableiten von Informationen aus der besagten Vielzahl von Datenpaketen das Ermitteln der Anzahl von Datenpaketen, auf welche eine bestimmte Routing-Regel anwendbar war, umfasst, und wobei das besagte Deaktivieren mindestens einer Routing-Regel das Deaktivieren der besagten bestimmten Routing-Regel umfasst.

4. Verfahren nach Anspruch 1 oder 2, wobei die besagte Vielzahl von Datenpaketen ein erstes Paket mit einer Ankunftszeit umfasst, und wobei eine bestimmte Routing-Regel des besagten Satzes von Routing-Regeln eine Installationszeit aufweist, wobei das Ableiten der besagten Informationen das Ermitteln einer zwischen der Installationszeit der besagten bestimmten Routing-Regel und der Ankunftszeit eines ersten Paketes der besagten Vielzahl von Datenpaketen, auf welche die besagte bestimmte Routing-Regel anwendbar ist, abgelaufenen Zeit umfasst, und wobei das besagte Deaktivieren mindestens einer Routing-Regel das Deaktivieren der besagten bestimmten Routing-Regel umfasst.

5. Verfahren nach Anspruch 1 oder 2, wobei die besagte Vielzahl von Datenpaketen ein letztes Paket mit einer Ankunftszeit umfasst, wobei das Ableiten der besagten Informationen das Ermitteln einer seit der Ankunftszeit des letzten Paketes der besagten Vielzahl von Datenpaketen, auf welche eine bestimmte Routing-Regel des besagten Satzes von Routing-Regeln angewendet wurde, abgelaufenen Zeit umfasst, und wobei das besagte Deaktivieren mindestens einer Routing-Regel das Deaktivieren der besagten bestimmten Routing-Regel umfasst.

6. Verfahren nach einem beliebigen der vorstehenden Ansprüche, wobei das Ableiten von Informationen aus der besagten Vielzahl von Datenpaketen das Analysieren des Inhalts der besagten Vielzahl von Datenpaketen umfasst.

7. Verfahren nach Anspruch 6, wobei das Ermitteln der besagten Informationen eine "Deep Packet Inspection" der besagten Vielzahl von Datenpaketen umfasst.

8. Verfahren nach Anspruch 6 oder 7, wobei das Ableiten der besagten Informationen das Erkennen eines Pakets der besagten Kommunikationssitzung, welches eine Aufforderung zur Entfernung der Routing-Regel enthält, umfasst.

9. Verfahren nach einem beliebigen der Ansprüche 6 bis 8, wobei das Ableiten der besagten Informationen das Erkennen des Vorhandenseins eines spezifischen Feldes in einem Datenpaket der besagten Vielzahl von Datenpaketen umfasst.

10. Verfahren zum Konfigurieren einer Routing-Vorrichtung durch eine Ziel-Vorrichtung, wobei die besagte Routing-Vorrichtung Datenpakete gemäß dem Verfahren eines beliebigen der vorstehenden Ansprüche weiterleitet, umfassend, an der besagten Ziel-Vorrichtung:
a. Empfangen eines ersten Datenpakets der besagten Kommunikationssitzung;
b. Analysieren des besagten ersten Datenpakets;
c. auf der Basis der besagten Analyse, Ermitteln einer Routing-Regel und von assoziierten Deaktivierungskriterien für die besagte Kommunikationssitzung, wobei die besagte Routing-Regel angibt, auf welcher der besagten Ausgangsschnittstellen die besagten Datenpakete weiterzuleiten sind;
d. Senden von Anweisungen für die Installation der besagten Routing-Regel und der besagten Deaktivierungskriterien an die besagte Routing-Vorrichtung.

11. Verfahren nach Anspruch 10, weiterhin umfassend das Senden einer Übertragungswiederholungsanforderung für das besagte erste Datenpaket der besagten Kommunikationssitzung an die Quell-Vorrichtung nach Senden von Anweisungen zur Installation der besagten Routing-Regel und der besagten assoziierten Deaktivierungskriterien an die besagte Routing-Vorrichtung.

12. Routing-Vorrichtung zur Verwendung in einem Datenkommunikationsnetzwerk, wobei die besagte Routing-Vorrichtung umfasst:
- Mindestens eine Eingangsschnittstelle zum Empfangen von Datenpaketen einer Kommunikationssitzung zwischen einer Quell-Vorrichtung und einer Ziel-Vorrichtung und
- mindestens zwei Ausgangsschnittstellen zum Weiterleiten der besagten Datenpakete,
- ein Speichermittel zum Speichern eines Satzes von Routing-Regeln an assoziierten Deaktivierungskriterien für mindestens eine Routing-Regel des besagten Satzes von Routing-Regeln und
- ein Mittel zum Ermitteln, auf der Basis des besagten Satzes mindestens einer Routing-Regel, auf welcher der besagten mindestens zwei Ausgangsschnittstellen die besagten empfangenen Pakete weiterzuleiten sind, wobei der besagte Satz mindestens einer Routing-Regel angibt, auf welcher der besagten mindestens zwei Ausgangsschnittstellen die besagten empfangenen Pakete weiterzuleiten sind,
**dadurch gekennzeichnet, dass** die besagte Routing-Vorrichtung für das Durchführen der folgenden Schritte ausgelegt ist:
- Deaktivieren mindestens einer des besagten Satzes mindestens einer Routing-Regel zumindest darauf basierend, ob die aus den besagten Datenpaketen abgeleiteten Informationen die besagten vorbestimmten Kriterien erfüllen, und
- Empfangen einer Routing-Regel und von assoziierten Deaktivierungskriterien von der besagten Ziel-Vorrichtung nach Weiterleiten eines ersten Datenpakets der besagten Vielzahl von Datenpaketen an die besagte Ziel-Vorrichtung und vor Senden eines zweiten Datenpakets der besagten Vielzahl von Datenpaketen.

13. Zielvorrichtung, ausgelegt für das Konfigurieren einer Routing-Vorrichtung gemäß Anspruch 12, umfassend:
- Ein Mittel zum Analysieren eines ersten Datenpakets einer Kommunikationssitzung zwischen einer Quell-Vorrichtung und einer Ziel-Vorrichtung;
- ein Mittel zum Ermitteln, auf der Basis der besagten Analyse, einer Routing-Regel und von assoziierten Deaktivierungskriterien für die besagte Kommunikationssitzung, wobei die besagte Routing-Regel angibt, auf welcher von mindestens zwei Ausgangsschnittstellen einer Routing-Vorrichtung die Datenpakete weiterzuleiten sind;
- ein Mittel zum Erstellen einer Anweisungsnachricht zum Installieren der Routing-Regel und der assoziierten Deaktivierungskriterien auf einer Routing-Vorrichtung und zum Senden der besagten Anweisungsnachricht an die besagte Routing-Vorrichtung.

14. Zielvorrichtung nach Anspruch 13, weiterhin ausgelegt für das Senden einer Übertragungswiederholungsanforderung für das besagte erste Datenpaket der besagten Kommunikationssitzung an die besagte Quell-Vorrichtung nach Senden der besagten Anweisungsnachricht an den besagten Router.

## Revendications

1. Procédé d'acheminement dans un dispositif d'acheminement de paquets de données d'une session de communication entre un dispositif source et un dispositif de destination, ledit dispositif d'acheminement comprenant au moins une interface d'entrée pour recevoir des paquets de données de ladite session de communication et au moins deux interfaces de sortie pour transférer lesdits paquets de données, comprenant l'exécution dans ledit dispositif d'acheminement des étapes suivantes :
a. recevoir une pluralité de paquets de données de ladite session de communication ;
b. consulter un ensemble de règles d'acheminement pour chaque paquet de données parmi ladite pluralité de paquets de données, ledit ensemble de règles d'acheminement indiquant l'interface parmi lesdites au moins deux interfaces de sortie sur laquelle chaque paquet de données parmi ladite pluralité de paquets de données doit être transféré ;
c. transférer chaque paquet de données parmi ladite pluralité de paquets de données sur les interfaces de sortie respectives ; et
d. obtenir des informations à partir de ladite pluralité de paquets de données ;
**caractérisé par** :
e. la désactivation d'au moins une règle d'acheminement parmi ledit ensemble de règles d'acheminement, au moins basée sur le fait que lesdites informations répondent ou non à des critères prédéterminés, et
f. la réception d'une règle d'acheminement et de critères de désactivation associés à partir dudit dispositif de destination après avoir transféré un premier paquet de données parmi ladite pluralité de paquets de données vers ledit dispositif de destination et avant l'envoi d'un deuxième paquet de données parmi ladite pluralité de paquets de données.

2. Procédé selon la revendication 1, dans lequel l'obtention d'informations à partir de ladite pluralité de paquets de données comprend l'analyse de caractéristiques d'un ordre d'arrivée de ladite pluralité de paquets de données, arrivant au niveau dudit dispositif d'acheminement.

3. Procédé selon la revendication 1 ou 2, dans lequel l'obtention d'informations à partir de ladite pluralité de paquets de données comprend la détermination du nombre de paquets de données auxquels une règle d'acheminement particulière a pu être appliquée, et dans lequel ladite désactivation d'au moins une règle d'acheminement comprend la désactivation de ladite règle d'acheminement particulière.

4. Procédé selon la revendication 1 ou 2, dans lequel ladite pluralité de paquets de données comprend un premier paquet ayant un temps d'arrivée et dans lequel une règle d'acheminement particulière parmi ledit ensemble de règles d'acheminement a un temps d'installation, dans lequel l'obtention desdites informations comprend la détermination d'un temps écoulé entre le temps d'installation de ladite règle d'acheminement particulière et le temps d'arrivée d'un premier paquet parmi ladite pluralité de paquets de données auxquels ladite règle d'acheminement particulière est applicable, et dans lequel ladite désactivation d'au moins une règle d'acheminement comprend la désactivation de ladite règle d'acheminement particulière.

5. Procédé selon la revendication 1 ou 2, dans lequel ladite pluralité de paquets de données comprend un dernier paquet ayant un temps d'arrivée, dans lequel l'obtention desdites informations comprend la détermination d'un temps écoulé depuis le temps d'arrivée du dernier paquet parmi ladite pluralité de paquets de données auxquels une règle d'acheminement particulière parmi ledit ensemble de règles d'acheminement particulières a été appliquée, et dans lequel ladite désactivation d'au moins une règle d'acheminement comprend la désactivation de ladite règle d'acheminement particulière.

6. Procédé selon l'une quelconque des revendications précédentes, dans lequel l'obtention d'informations à partir de ladite pluralité de paquets de données comprend l'analyse du contenu de ladite pluralité de paquets de données.

7. Procédé selon la revendication 6, dans lequel la détermination desdites informations comprend une inspection approfondie des paquets de ladite pluralité de paquets de données.

8. Procédé selon la revendication 6 ou 7, dans lequel l'obtention desdites informations comprend la détection d'un paquet de ladite session de communication qui comprend une demande de suppression de règle d'acheminement.

9. Procédé selon l'une quelconque des revendications 6 à 8, dans lequel l'obtention desdites informations comprend la détection de la présence d'un champ spécifique dans un paquet de données parmi ladite pluralité de paquets de données.

10. Procédé pour configurer un dispositif d'acheminement par un dispositif de destination, ledit dispositif d'acheminement acheminant des paquets de données conformément au procédé selon l'une quelconque des revendications précédentes, comprenant au niveau dudit dispositif de destination les étapes suivantes :
a. recevoir un premier paquet de données de ladite session de communication ;
b. analyser ledit premier paquet de données ;
c. sur la base de ladite analyse, déterminer une règle d'acheminement et des critères de désactivation associés pour ladite session de communication, ladite règle d'acheminement indiquant l'interface parmi lesdites interfaces de sortie sur laquelle lesdits paquets de données doivent être transférés ;
d. envoyer des instructions pour installer ladite règle d'acheminement et lesdits critères de désactivation associés audit dispositif d'acheminement.

11. Procédé selon la revendication 10, comprenant en outre l'envoi d'une demande de renvoi pour ledit premier paquet de données de ladite session de communication audit dispositif source après l'envoi d'instructions pour installer ladite règle d'acheminement et lesdits critères de désactivation associés audit dispositif d'acheminement.

12. Dispositif d'acheminement destiné à être utilisé dans un réseau de communication de données, ledit dispositif d'acheminement comprenant :
- au moins une interface d'entrée pour recevoir des paquets de données d'une session de communication entre un dispositif source et un dispositif de destination et
- au moins deux interfaces de sortie pour transférer lesdits paquets de données,
- des moyens de stockage pour stocker un ensemble de règles d'acheminement et des critères de désactivation associés pour au moins une règle d'acheminement dudit ensemble de règles d'acheminement et
- des moyens pour déterminer l'interface parmi lesdites au moins deux interfaces de sortie sur laquelle lesdits paquets reçus doivent être transférés sur la base dudit ensemble d'au moins une règle d'acheminement, ledit ensemble d'au moins une règle d'acheminement indiquant l'interface parmi lesdites au moins deux interfaces de sortie sur laquelle lesdits paquets reçus doivent être transférés,
**caractérisé en ce que** ledit dispositif d'acheminement est adapté pour :
- désactiver au moins une parmi ledit ensemble d'au moins une règle d'acheminement au moins sur la base du fait que des informations obtenues à partir desdits paquets de données correspondent ou non auxdits critères prédéterminés, et
- recevoir une règle d'acheminement et des critères de désactivation associés à partir dudit dispositif de destination après avoir transféré un premier paquet de données parmi ladite pluralité de paquets de données vers ledit dispositif de destination et avant l'envoi d'un deuxième paquet de données parmi ladite pluralité de paquets de données.

13. Dispositif de destination adapté pour configurer un dispositif d'acheminement selon la revendication 12, comprenant :
- des moyens pour analyser un premier paquet de données d'une session de communication entre un dispositif source et un dispositif de destination ;
- des moyens pour déterminer, sur la base de ladite analyse, une règle d'acheminement et des critères de désactivation associés pour ladite session de communication, ladite règle d'acheminement indiquant l'interface parmi lesdites au moins deux interfaces de sortie d'un dispositif d'acheminement sur laquelle les paquets de données doivent être transférés ;
- des moyens pour créer un message d'instruction pour installer la règle d'acheminement et les critères de désactivation associés sur le dispositif d'acheminement et pour envoyer ledit message d'instruction audit dispositif d'acheminement.

14. Dispositif de destination selon la revendication 13, adapté en outre pour envoyer une demande de renvoi pour ledit premier paquet de données de ladite session de communication audit dispositif source après l'envoi dudit message d'instruction audit routeur.
